# EUROPEAN PATENT SPECIFICATION

(11) **EP 3 603 935 B1**
(45) Date of publication and mention of the grant of the patent: **09.09.2020**
(21) Application number: 18000646.2
(22) Date of filing: 03.08.2018
(51) Int. Cl.: B29C 51/16, B29C 51/10, B29C 51/08, B29C 51/22, B29C 51/26

(54) **DEVICE FOR MANUFACTURING CONTAINERS BY THERMOFORMING**
VORRICHTUNG ZUR HERSTELLUNG VON BEHÄLTERN MITTELS THERMOFORMUNG
DISPOSITIF DE FABRICATION DE RÉCIPIENTS PAR THERMOFORMAGE

(43) Date of publication of application: 05.02.2020
(73) Proprietor: Industrias Tecnológicas de Mecanización y Automatizaciòn, S.A., 08960 Sant Just Desvern (Barcelona) (ES)
(72) Inventor: Hernández Socastro, José Manuel, 28043 Madrid (ES)
(74) Representative: Maldonado Jordan, Julia

(56) References cited:
- EP-A1- 3 028 835
- WO-A1-2016/177986
- FR-A1- 2 986 176

## Description

### Technical field.

The object of the present invention is a device for manufacturing containers by thermoforming in a mould with several cavities wherein a decorative paper is inserted before receiving the plastic that is thermoformed in the mould.

This device, which is applicable in the manufacture of plastic containers preferably intended for food packaging, for example yoghurts or desserts in general, has characteristics related to the actuation of support tabs of the decorative paper, and aimed at eliminating the movement mechanism of the tabs during the thermoforming of the container, enabling said tabs to change from an operative position, wherein they access the inside of the mould holding the label, to an inoperative position, wherein they are arranged outside the mould and do not make any outer mark or step in the produced container.

### Prior state of the art

Document FR 2986176 (ERCA) describes a mould for thermoforming that is applicable in the manufacture of vessels by thermoforming, which has a mould body with at least one thermoforming chamber suitable for receiving a thermoplastic preform.

The aforementioned mould block comprises at least one main body, at least one mobile mould end-wall piece and at least one retractable element.

The aforementioned mobile piece that constitutes the end-wall can be moved with respect to the main body between a closed position against said main body and an open position in which it separates from the main body defining an lateral opening suitable for the ingress of a retractable element through said lateral opening in the open position of the mobile mould end-wall piece and forms at least one retractable support inside the thermoforming chamber.

A drawback of this prior art is determined by the need to distance the mobile end-wall piece and form a lateral opening through which foreign materials can access the inside of the mould; with the added risk that, when the mobile piece is moved towards the closed position, foreign elements can be trapped between said mobile piece and the body of the mobile.

The invention patent ES2573002 by the same owner as the present invention, describes a device for manufacturing containers by thermoforming according to the preamble of claim 1 that enables a thermoformed container to be obtained, with decorative paper incorporated, without the need to move the end-wall of the cavity of the mould.

In said prior art, the end-wall of each cavity of the mould is fixed on an end-wall holder plate, without the possibility of moving with respect to the body of the mould, thus preventing both the distancing thereof from the body of the mould, and the entry of foreign materials into the inside of the cavity of the mould and the possibility of the same being trapped between the mobile end-wall and the body of the mould, as is the case in document FR 2986176.

In the device of invention patent ES2573002, the support tabs of the decorative paper are provided with rotation shafts that enable the tilting thereof between: - an operative position wherein the tabs are arranged between the body of the mould and the end-wall thereof and access the inside of the cavity of the mould, forming a support stop of a decorative paper; and - an inoperative position wherein they are arranged outside the cavity of the mould.

Said tabs have actuation means comprising: - an elastic sealing gasket that clasps the outside of the tabs corresponding to the same cavity of the mould and tends to keep them in an operative or inoperative position, and - an actuation cylinder aligned with the cavity of the mould and which acts by means of a mobile plate and stops on one end of the tabs, causing the folding thereof towards an opposite position, either inoperative or operative.

To prevent the tabs from defining a step or protrusion in the wall of the thermoformed vessel, which is also an object of the present invention, the invention patent ES2573002 envisages an embodiment wherein the decorative paper is located in the cylindrical portion of the cavity of the mould, resting on the tabs that, before the thermoforming of the container, are in an operative position due to the action of the elastic gasket; the device being programmed so that the actuation cylinder causes the movement of the support tabs of the paper towards an inoperative position, in unison with the inlet of air into the cavities of the mould, such that the tabs do not define any step or mark on the outer surface of the container; said container therefore having a continuous and uniform silhouette, unlike other containers that incorporate decorative paper.

This solution requires, during the thermoforming of the container, in two opposite positions that are externally aligned with the mouth and with the end-wall of each of the cavities of the mould, the provision of:
- a forming punch responsible for pushing a plastic sheet towards the inside of the cavity of the mould, which expands against the inner surface of the mould by means of the insertion of pressurised air, said sheet adopting the shape of the corresponding container and;
- the actuation cylinder responsible for causing the movement of the support tabs of the decorative paper towards an inoperative position, that is towards the outside of the mould, in unison with the inlet of air into the cavities of the mould, such that the tabs do not define any step or mark on the outer surface of the container produced by thermoforming.

The fact that the forming punch and the actuation cylinder (one for each cavity of the mould) of the tabs coincide in the container thermoforming area makes the thermoforming device constructively complicated and makes access to said area of the device difficult in order to carry out mounting or maintenance tasks of the device.

Therefore, the technical problem set forth is the development of a container thermoforming device, of the type described in the invention patent ES2573002, but that has characteristics suitable for solving the proposed problem, minimising the number of elements that coincide in the thermoforming area and that similarly prevent the tabs from defining marks or steps on the surface of the containers produced by thermoforming.

### Description of the invention.

The device for manufacturing containers by thermoforming, object of this invention, is of the type described in the preamble of the attached first claim, specifically having:
- a mould body (1) with at least one cavity for the formation of a container,
- support tabs of a decorative paper, mounted on a shaft that can rotate between: an operative position wherein they access the inside of the cavity of the mould and form a support stop of a decorative paper, and an inoperative position wherein they arranged outside the cavity of the mould,
- actuation means of the tabs, which comprise an actuation cylinder that acts by means of a mobile plate (5) and stops (6) on a rear end of the tabs (3), causing them to fold towards an operative support position of the decorative paper inside the mould;
- a forming punch (14) to insert into each cavity of the mould a plastic sheet (16) that, in the thermoforming stage, expands against the inner surface of the mould by means of the insertion of pressurised air in order to form a container with the corresponding shape.

In accordance with the invention, the device comprises: an insertion station for inserting the decorative paper into the mould and a container forming station.

The actuation cylinder of the tabs is arranged in the insertion station for inserting the decorative paper into the mould; and the forming area of the container lacks external actuation means of the tabs, said tabs being moved towards an inoperative position, outside the mould, by the trust of the plastic sheet itself during the expansion thereof in the thermoforming phase of the container.

This characteristic of the invention enables the tabs to automatically change from the operative support position of the decorative paper to the inoperative position during the thermoforming of the container, without needing to use external actuation means, or synchronising them with the thermoforming phase, and such that said tabs do not define marks or steps on the thermoformed container.

### Brief description of the content of the drawings.

As a complement to the description provided herein, and for the purpose of helping to make the characteristics of the invention more readily understandable, the present specification is accompanied by a set of drawings which, by way of illustration and not limitation, represent the following:

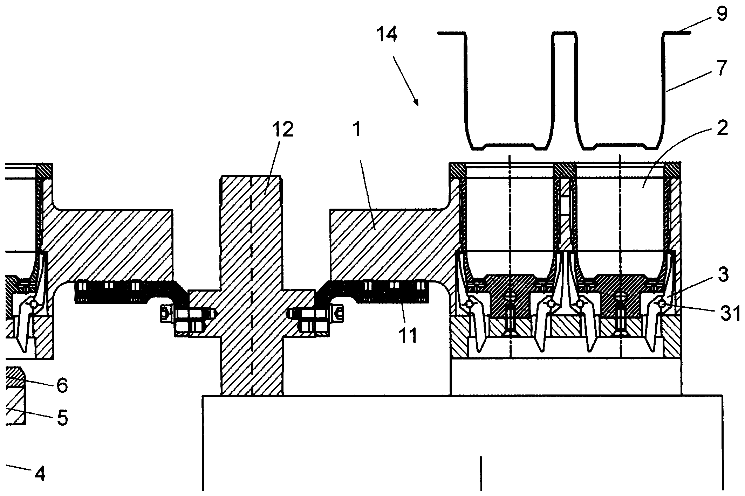

- Figure 1 shows a cross-sectional elevation view of the device of the invention, with a mould at the insertion station for inserting the decorative paper, and another mould at the thermoforming station.
- Figure 2 shows a view of the device that is similar to the above figure, during the insertion of the decorative paper and the thermoforming of a container at the respective work stations.

### Detailed description of an embodiment of the invention.

In the exemplary embodiment shown in the attached figures, the device for manufacturing containers by thermoforming comprises the elements that are indicated below with the respective references thereof:
- (1) Mould
- (2) Mould cavity
- (21) Sleeve
- (22) (end-wall)
- (3) Tab
- (31) Tab shaft
- (4) Cylinder.
- (5) Mobile plate
- (6) Stop.
- (7) Decorative paper
- (8) Insertion piston
- (9) Plastic sheet.
- (10) Forming punch
- (11) Mould support
- (12) Press shaft
- (13) Insertion station for inserting the decorative paper
- (14) Thermoforming station

Said device comprises moulds (1) provided with cavities (2) with the respective sleeves (21) and end-walls (22) thereof, and tabs (3) to support a decorative paper (7) that is inserted by insertion pistons (8) for inserting the decorative paper into the cavities (2) of the mould (1) before the thermoforming of the containers.

These tabs (3) are mounted on respective shafts (31) that can rotate between an operative position wherein they access the inside of the cavities (2) of the mould (1) defining a support stop of the decorative paper (7), and an inoperative position wherein they are arranged outside the cavities (2) of the moulds.

In order to arrange the tabs (3) in an operative position, the device comprises a cylinder (4) that, during the insertion of the decorative paper (7), is arranged opposite the lower area of the mould and is provided with a mobile plate (5) and stops (6) that act on the rear ends of the tabs, arranging them in an operative position.

The thermoforming of the containers is carried out starting with a plastic sheet (9) that is inserted in cavities (2) by means of forming punches (10).

In the example shown in the figures, the device comprises moulds (1) radially mounted by means of respective supports (11) on a shaft (12) that successively arranges them in an insertion station (13) for inserting the decorative paper into the cavities of the mould and in a thermoforming station (14) for thermoforming containers in said cavities (2).

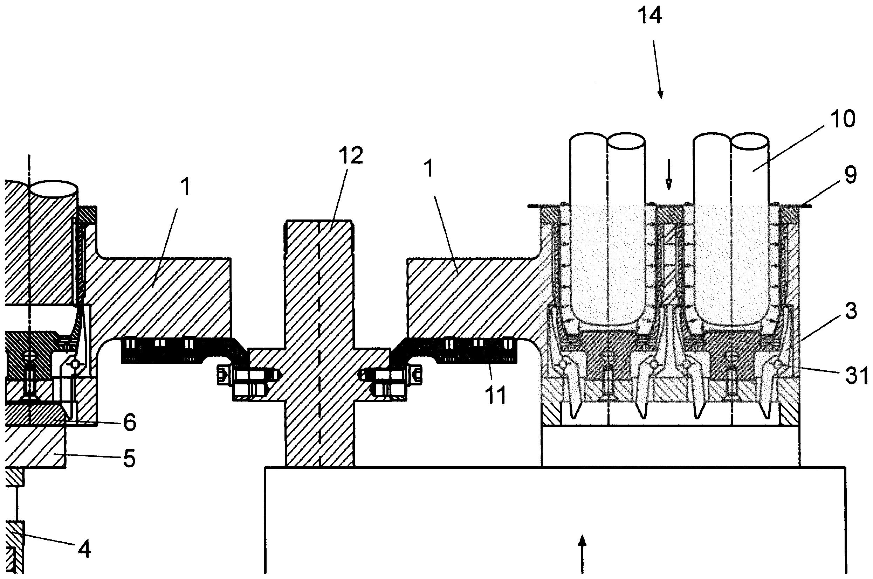

As can be seen in figure 2, the actuation cylinder (4) of the tabs (3) towards the operative position is mounted on the insertion station (13) for inserting the decorative paper, locating them in said operative position to support the decorative paper (7).

When the shaft (12) rotates moving the mould containing the decorative paper from the insertion station (13) to the container thermoforming station (14), as shown in figure 2, the pistons (8) insert into each cavity (2) a plastic sheet (9) that expands by means of the insertion of pressurised air against the inner surface of the cavities (2); the expansion itself of said plastic sheet pushing the tabs (3) towards an inoperative position, outside the mould; such that said tabs do not define any mark or step on the surface of the containers produced by thermoforming.

Having sufficiently described the nature of the invention, in addition to a preferred exemplary embodiment, it is hereby stated for the relevant purposes that the materials, shape, size and layout of the described elements may be modified, provided that it does not imply altering the invention claimed below.

## Claims

1. A device for manufacturing containers by thermoforming; comprising:
- a mould body (1) with at least one cavity for the thermoforming of a container,
- and a container forming station,
- support tabs (3) of a decorative paper, mounted on a shaft (31) that can rotate between: an operative position wherein they access the inside of the cavity (2) of the mould and form a support stop of a decorative paper (7), and an inoperative position wherein they are arranged outside the cavity (2) of the mould,
- said tabs being moved towards an inoperative position, outside the mould, in the thermoforming station by the thrust of the plastic sheet itself during the expansion thereof in the thermoforming phase of the container,
- actuation means of the tabs, which comprise an actuation cylinder (4) that acts on a rear end of the tabs (3), causing them to fold towards an operative support position of the decorative paper (7) inside the mould;
- a forming punch (10) to insert into each cavity (2) of the mould a plastic sheet (9) that, in the thermoforming stage, expands against the inner surface of the cavity (2) by means of the insertion of pressurised air, adopting the corresponding shape;
**characterized in that** it comprises: an insertion station (13) for inserting the decorative paper (7) into the cavities (2) of the mould, and **in that** the actuation cylinder (4) of the tabs (3) is mounted on the insertion station (13) for inserting the decorative paper, and the forming area of the container lacks external actuation means of the tabs (3).

2. The device according to the preceding claim; **characterised in that** the cylinder actuates on the tabs (3), in the insertion station (13) for inserting the decorative paper, by means of a mobile plate (5) and stops (6).

## Patentansprüche

1. Vorrichtung zur Herstellung von Behältern durch Tiefziehen; umfassend:
- einen Formkörper (1) mit mindestens einem Hohlraum zum Tiefziehen eines Behälters,
- und eine Behälterausbildungsstation,
- Stützlaschen (3) aus einem Dekopapier, die an einer Welle (31) montiert sind, die sich zwischen Folgendem drehen kann: einer Betriebsposition, wobei diese auf die Innenseite des Hohlraums (2) der Form zugreifen und einen Stützanschlag aus Dekopapier (7) bilden, und einer Nicht-Betriebsposition, wobei diese außerhalb des Hohlraums (2) der Form angeordnet sind,
- wobei die Laschen in Richtung einer Nicht-Betriebsposition bewegt werden, außerhalb der Form, in der Tiefziehstation durch Schubkraft der Kunststoffbahn selbst während der Ausdehnung davon in der Tiefziehphase des Behälters,
- Betätigungsmittel der Laschen, die einen Betätigungszylinder (4) umfassen, der auf ein hinteres Ende der Laschen (3) wirkt, damit sich diese in Richtung einer Betriebsstützposition des Dekopapiers (7) innerhalb der Form falten,
- ein Formstempel (10) zum Einführen in jeden Hohlraum (2) der Form einer Kunststoffbahn (9), die sich in der Tiefziehstufe gegen die Innenoberfläche des Hohlraums (2) mittels Einleitung von Druckluft ausdehnt und die entsprechende Form annimmt;
**dadurch gekennzeichnet, dass** diese umfasst; eine Einführstation (13) zum Einführen des Dekopapiers (7) in die Hohlräume (2) der Form
und dadurch, dass der Betätigungszylinder (4) der Laschen (3) an der Einführstation (13) zum Einführen des Dekopapiers montiert ist und dem Ausbildungsbereich des Behälters externe Betätigungsmittel der Laschen (3) fehlen.

2. Vorrichtung nach dem vorhergehenden Anspruch; **dadurch gekennzeichnet, dass** der Zylinder auf die Laschen (3) in der Einführstation (13) zum Einführen des Dekopapiers mittels einer mobilen Platte (5) und Anschlägen (6) wirkt.

## Revendications

1. Dispositif de fabrication de récipients par thermoformage ; comprenant :
- un corps de moule (1) avec au moins une cavité pour le thermoformage d'un récipient,
- et une station de formage de récipients,
- des languettes de support (3) d'un papier décoratif, montées sur un arbre (31) qui peut tourner entre: une position fonctionnelle dans laquelle elles accèdent à l'intérieur de la cavité (2) du moule et forment une butée de support d'un papier décoratif (7), et une position non fonctionnelle dans laquelle elles sont disposées à l'extérieur de la cavité (2) du moule,
- lesdites languettes étant déplacées vers une position non fonctionnelle, à l'extérieur du moule, dans le poste de thermoformage par la poussée de la propre feuille de plastique pendant sa dilatation dans la phase de thermoformage du récipient,
- des moyens d'actionnement des languettes, qui comprennent un vérin d'actionnement (4) qui agit sur une extrémité arrière des languettes (3), les faisant plier vers une position de support fonctionnelle du papier décoratif (7) à l'intérieur du moule ;
- un poinçon de formage (10) pour insérer dans chaque cavité (2) du moule une feuille de plastique (9) qui, en phase de thermoformage, se dilate contre la surface interne de la cavité (2) au moyen de l'insertion d'air sous pression, adoptant la forme correspondante ;
**caractérisé en ce qu'**il comprend : un poste d'insertion (13) pour l'insertion du papier décoratif (7) dans les cavités (2) du moule,
et **en ce que** le vérin d'actionnement (4) des languettes (3) est monté sur le poste d'insertion (13) pour l'insertion du papier décoratif, et la zone de formage du récipient est dépourvue de moyens d'actionnement externes des languettes (3).

2. Dispositif selon la revendication précédente ; **caractérisé en ce que** le vérin agit sur les languettes (3), dans la station d'insertion (13) pour l'insertion du papier décoratif, au moyen d'une plaque mobile (5) et de butées (6).
